# EUROPEAN PATENT APPLICATION

(11) **EP 0 678 247 A1**
(43) Date of publication of application: **25.10.1995**
(21) Application number: 95302540.0
(22) Date of filing: 18.04.1995
(51) Int. Cl.: A23K 1/16, A23K 1/18, A23K 1/10

(54) **Pet food product containing omega-6 and omega-3 fatty acids**

(30) Priority: 18.04.1994 US 228669
(71) Applicant: THE IAMS COMPANY, Dayton, Ohio 45414 (US)
(72) Inventor: Reinhart, Gregory A., Dayton, Ohio 45415 (US)
(74) Representative: Cummings, Sean Patrick

(57) **Abstract**

A pet food product is provided for use in reducing inflammatory and allergic skin responses. The pet food composition contains omega-6 and omega-3 fatty acids and the ratio of the omega-6 fatty acids to the omega-3 fatty acids is from 3:1 to 10:1. Also, at least three percent of the total fatty acids in the pet food composition are omega-6 fatty acids. A method of improving skin appearance is also provided by feeding pet animals with a diet consisting essentially of the pet food product.

## Description

This invention relates to a pet food product for use in reducing inflammatory and allergic skin responses, and more particularly to a pet food composition containing omega-6 (n-6) and omega-3 (n-3) fatty acids.

Fatty acids are required for normal growth and function of animals. Omega-6 fatty acids are essential fatty acids and one of the most common fatty acids in the typical diet. A lack of n-6 fatty acids can result in dry, flaky skin, skin lesions, stunted growth, and, eventually, death. However, n-6 fatty acids also promote allergic and inflammatory conditions in the skin.

Some attempts have been made to overcome the inflammatory effects of n-6 fatty acids. A few current pet foods use a combination of n-6 and n-3 fatty acids to try and alleviate the n-6 problem. However, these products are unsatisfactory because they use n-3 fatty acids in such small quantities that the positive effects are minimal.

Therefore, a need exists for a pet food product that provides a healthy diet containing the positive effects of n-6 fatty acids while sufficiently offsetting their detrimental inflammatory effects by adding n-3 fatty acids. In other words, a pet food product is needed that not only contains n-3 fatty acids, but also uses a ratio of n-6 to n-3 fatty acids that provides the beneficial effects of both fatty acids in pet animals.

The present invention meets that need by providing a pet food product and a process for reducing inflammatory allergic responses comprising feeding a pet animal a food composition containing a specific ratio of omega-6 to omega-3 fatty acids. This diet is useful for maintaining healthy animals and for preventing and/or alleviating symptoms of such skin diseases as dermatitis and pruritus.

The pet food product of the invention can contain a wide variety of protein sources and additives and is suitable for treating and maintaining pet animals such as dogs, cats, horses, and more exotic animals such as guinea pigs. It is preferably used to treat dogs. The important aspect of the invention is that both omega-6 and omega-3 fatty acids are present in the product. These fatty acids can be present in a ratio of omega-6 fatty acids to omega-3 fatty acids of from 3:1 to 10:1. In a preferred embodiment, the pet food product has a ratio of omega-6 fatty acids to omega-3 fatty acids from 5:1 to 10:1, and most preferably from 5:1 to 7.5:1.

Preferably, at least three percent of the total fatty acids in the pet food composition of the present invention are omega-3 fatty acids. This ensures that the n-3 fatty acids will be present in the animal in sufficient quantities to have a significant positive effect. It is also preferable for at least fifteen percent of the total fatty acids in the pet food composition to be n-6 fatty acids.

Any omega-3 fat source can be used in the present invention. However, fish oil and flax are the preferred sources, with fish oil being the most preferred. Also, any n-3 fatty acids can be used, but eicosapentaenoic acids, docosahexaenoic acids, and alpha-linolenic acids are preferred. Most preferably, a combination of all three fatty acids is used.

Accordingly, it is an object of the present invention to provide a pet food composition which reduces inflammatory and allergic skin responses in pet animals by supplying the pet animal with a balanced diet of omega-6 and omega-3 fatty acids.

Fig. 1 shows the effects of dietary omega-6 to omega-3 fatty acid ratios on lipopolysaccharide-induced LTB₄ synthesis in dog skin 90 minutes after lipopolysaccharide injection. The values are means +/- standard error of the mean (sem) of six dogs per group.

Fig. 2 shows the effects of dietary omega-6 to omega-3 fatty acid ratios on lipopolysaccharide-induced LTB₅ synthesis in dog skin 90 minutes after lipopolysaccharide injection. The values are means +/- sem of six dogs per group.

Fig. 3 shows the effects of dietary omega-6 to omega-3 fatty acid ratios on calcium ionophore A23187-induced LTB₄ synthesis in dog neutrophils. The values are means +/- sem of six dogs per group.

Fig. 4 shows the effects of dietary omega-6 to omega-3 fatty acid ratios on calcium ionophore A23187-induced LTB₅ synthesis in dog neutrophils. The values are means +/- sem of six dogs per group.

Fig. 5 shows the effects of dietary omega-6 to omega-3 fatty acid ratios on LTB₄ in dog plasma. The values are means +/- sem of six dogs per group.

Fig. 6 shows the effects of dietary omega-6 to omega-3 fatty acid ratios on LTB₅ in dog plasma. The values are means +/- sem of six dogs per group.

This invention effectively reduces skin inflammations and allergic skin reactions in pet animals by using omega-3 fatty acids to reduce the inflammatory effects of omega-6 fatty acids. The n-6 fatty acid connection with inflammatory reactions arises from the fact that fatty acids are converted into isomers of leukotriene B in the body. The isomer of leukotriene B derived from n-6 fatty acids is leukotriene B₄ (LTB₄). Stimulation of LTB₄ receptors is one of the primary steps in starting a cascade reaction that perpetuates inflammatory responses in the skin.

Omega-3 fatty acids, on the other hand, are much less proinflammatory. The isomer of leukotriene B derived from n-3 fatty acids, leukotriene B₅ (LTB₅), is 30-100 times less active at stimulating the leukotriene B receptor than the corresponding n-6 fatty acid derived LTB₄.

Omega-3 fatty acids also reduce the amount of omega-6 fatty acids present in the skin by competing for incorporation into body tissues. Diets enriched in n-3 fatty acids can result in a decrease in concentrations of n-6 fatty acids such as arachidonic acid in several tissues including skin, heart, aorta, platelets, erythrocytes, testis, and adipose tissue in dogs, pigs, rabbits, rats and humans. N-6 and n-3 fatty acids also compete with each other to be enzymatically converted into leukotrienes.

The net effect of reducing n-6 fatty acid intake and increasing n-3 intake is a large reduction in the amount of proinflammatory LTB₄ and an increase in the amount of the much less inflammatory LTB₅. This helps to reduce the inflammations and allergic reactions of such common skin disorders as dermatitis and pruritus.

In its preferred form, the pet food composition of the present invention contains a ratio of omega-6 fatty acids to omega-3 fatty acids of from 3:1 to 10:1, preferably from 5:1 to 10:1, and most preferably from 5:1 to 7.5:1. This provides the maximum benefits of both n-6 and n-3 fatty acids in one convenient food source. The advantage of combining both fatty acids in a complete balanced pet food is that it is difficult to attain the proper ratio of fatty acids any other way. Supplements are not accurate because the owner would need to know the fatty acid profile, fat content, and mass of all the food and treats consumed by the pet to effectively balance the fatty acids. This is just not practical. Furthermore, the simplicity of using this product should ensure that the pet is consistently receiving the proper fatty acid balance.

It is preferred that at least fifteen percent of the total fatty acids in the pet food composition are n-6 fatty acids. It is also preferred that at least three percent of the total fatty acids in the pet food composition of the present invention be omega-3 fatty acids. This ensures that the n-3 fatty acids will be present in the animal in sufficient quantities to have a significant positive effect.

In another preferred embodiment, the fat source for the omega-3 fatty acids in the product is one or more compounds selected from the group consisting of fish oil and flax, and most preferably is fish oil. Additionally, the omega-3 fatty acids are preferably one or more compounds selected from the group consisting of eicosapentaenoic acid, docosahexaenoic acid, and alpha-linolenic acid. Most preferably, a combination of all three fatty acids is used. Finally, while the pet food product of the present invention can be used to treat and maintain any pet animal, it is preferably used to treat dogs, cats or horses, most preferably dogs.

In order that the invention may be more readily understood, reference is made to the following examples, which are intended to illustrate the invention but not limit the scope thereof.

### Examples

Thirty one-year old purpose bred laboratory Beagles were allotted equally by sex to five groups of six dogs each. All dogs were parasite free and were current on their vaccinations. The dogs were housed in temperature controlled indoor kennels with free access to water. The dogs were fed once a day.

Prior to dietary treatments, all dogs were normalized for eight weeks on a basal diet. The basal diet contained 30-34% crude protein, 20-23% crude fat, 1.5-4.0% crude fiber, 5-8% minerals/ash, and 5-10% moisture with carbohydrates (nitrogen-free extract) forming the balance of the diet. The basal diet was formulated with fresh chicken and chicken by-product meal as protein sources, corn and rice as carbohydrate sources, and chicken fat as the lipid source with an overall n-6:n-3 ratio of 28:1. The five experimental diets were formulated to the same crude protein, crude fat, and crude fiber levels as the basal diet with varying omega-6 to omega-3 ratios between treatments. The ingredients used in the experimental diets were similar to those used in the basal diet with the exception of additional fat sources enriched in specific omega-3 or omega-6 fatty acids. Menhaden oil (a concentrated source of eicosapentaenoic acid, 20:5n-3, and docosahexaenoic acid, 22:6n-3). Flax (a concentrated source of alpha-linolenic acid, 18:3n-3) and safflower oil (a concentrated source of linoleic acid, 18:2n-6) were used to produce dietary omega-6:omega-3 fatty acid ratios of 5:1, 10:1, 25:1, 50:1, and 100:1. Resulting laboratory analyses were 5.3:1, 10.4:1, 24.1:1, 51.6:1, and 95.8:1, respectively. Omega-3 fatty acids were 3.4, 1.8, 0.8, 0.5, and 0.4 percent of total fatty acids for the 5:1, 10:1, 25:1, 50:1, and 100:1 diets, respectively. Omega-6 fatty acids were 18.1, 18.7, 19.3, 25.8, and 28.3 percent of total fatty acids for the 5:1, 10:1, 25:1, 50:1, and 100:1 diets, respectively.

All dogs were fed the basal diet for eight weeks followed by the experimental diets for twelve weeks. Skin biopsies, plasma, and isolated neutrophils for leukotriene synthesis were obtained after the eight week preliminary period, and at 6 and 12 weeks after initiation of the experimental diets.

### Example 1

Leukotriene B synthesis was induced in dog skin by the intradermal injection of bacterial lipopolysaccharide (LPS). Preliminary experiments indicated the basal concentration of LTB₄ in nonstimulated dog skin varied from low to nondetectable. Intradermal LPS injections increased skin LTB₄ concentrations to readily measurable concentrations of approximately 20-45 pg LTB₄/mg protein in all dogs.

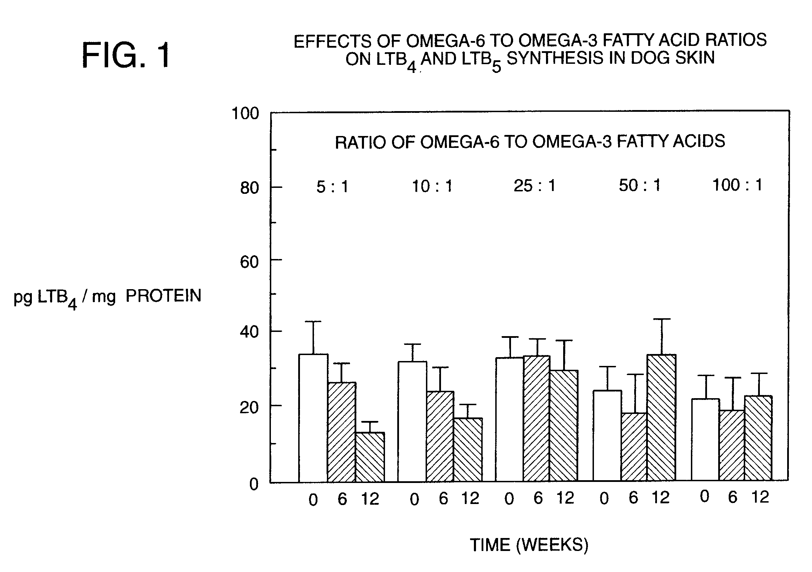

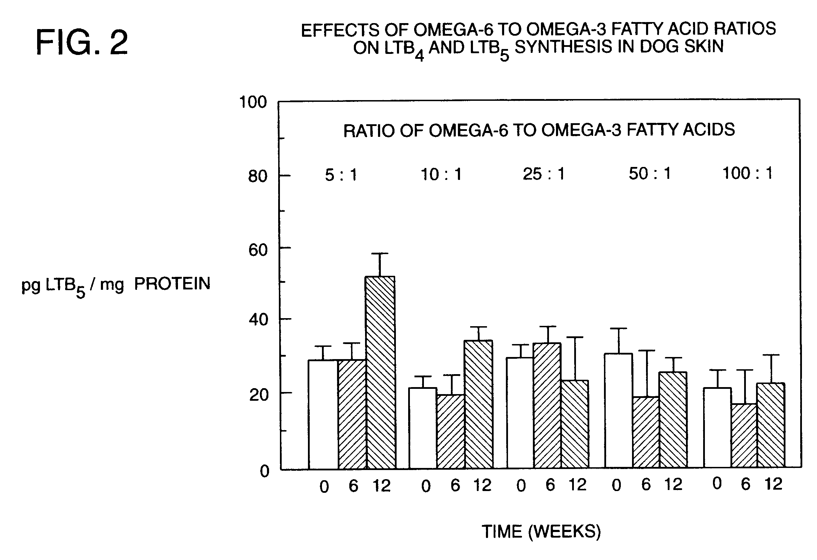

The 5:1 and 10:1 enriched n-3 fatty acid diets had dual effects on LTB synthesis in dog skin. The skin concentration of n-6 LTB₄ decreased (see Figure 1) and the concentration of the corresponding n-3 isomer of LTB₄, LTB₅, increased (see Figure 2) after consumption of n-3 enriched diets. After 12 weeks of feeding, the 5:1 diet decreased LPS-induced skin LTB₄ concentrations by 62% from a baseline concentration of 34 +/- 9 picogram (pg)/milligram (mg) protein to 13 +/- 3 pg/mg protein (see Figure 1). The 10:1 diet resulted in a 48% reduction in skin LTB₄ concentration at 12 weeks from a basal level of 31 +/- 5 pg/mg protein to 16 +/- 4 pg/mg protein. The 25:1, 50:1, and 100:1 diets did not alter LTB₄ synthesis significantly in dog skin when compared to pretreatment levels for each group.

Increased LPS-induced LTB₅ immunoreactivity was detected in skin after 12 weeks of feeding the dogs 5:1 and 10:1 diets. Low amounts of LPS-induced LTB₅ immunoreactivity were detected in skin tissue from all groups at baseline. The 5:1 and 10:1 n-3 enriched diets increased skin LPS-induced LTB₅ immunoreactivity by 79% and 48%, respectively (see Figure 2). The 5:1 diet increased skin LTB₅ immunoreactivity from a baseline concentration of 29 +/- 4 pg/mg protein to 52 +/- 6 pg/mg protein at 12 weeks. The 10:1 diet increased skin LTB₅ immunoreactivity from a baseline concentration of 21 +/- 3 pg/mg protein to 35 +/- 4 pg/mg protein. The other dietary treatments did not significantly alter LPS-induced LTB₅ immunoreactivity in dog skin.

### Example 2

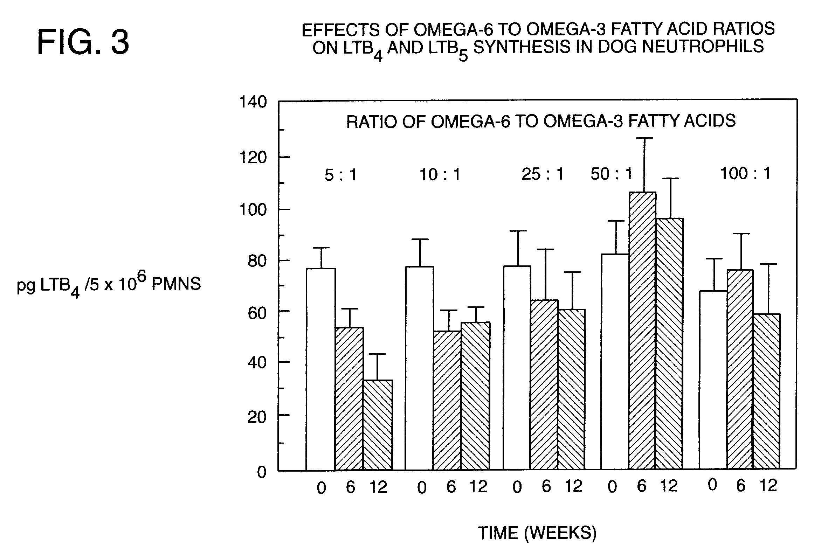

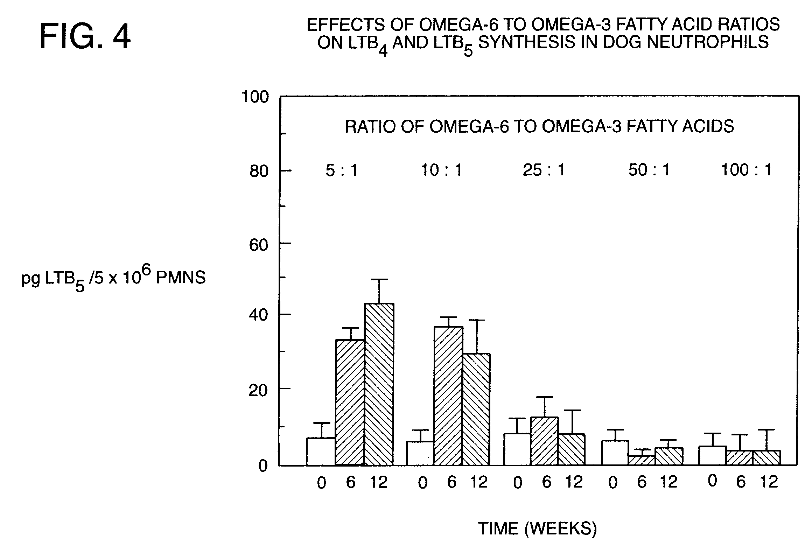

Stimulation of isolated dog neutrophils with 10 µM of calcium ionophore A23187 (from Sigma Chemical Co.) resulted in the activation of 5-lipoxygenase and LTB synthesis. The amount of calcium ionophore-induced LTB₄ and LTB₅ synthesis above the corresponding basal, nonstimulated LTB₄ and LTB₅ synthesis in a 10 minute incubation period is shown in Figures 3 and 4. Large amounts of LTB₄ were readily synthesized from neutrophils obtained from all five groups of dogs after basal dietary conditioning (see Figure 3). In contrast, small amounts of LTB₅ were synthesized and released from dogs after basal dietary conditioning (see Figure 4).

The mean concentration of LTB₄ synthesized and released from dog neutrophils was reduced after 6 and 12 weeks of feeding dogs the 5:1 and 10:1 diets (see Figure 3). The 5:1 diet reduced the baseline A23187-induced LTB concentration from 77 +/- 8 pg/1.2 x 10⁶ neutrophils to 54 +/- 7 pg/1.2 x 10⁶ neutrophils at 6 weeks, and to 33 +/- 8 pg/1.2 x 10⁶ neutrophils at 12 weeks. The 10:1 diet reduced the baseline A23187-induced LTB concentration from 78 +/-11 pg/1.2 x 10⁶ neutrophils to 53 +/- 8 pg/1.2 x 10⁶ neutrophils at 6 weeks, and to 56 +/- 6 pg/1.2 x 10⁶ neutrophils at 12 weeks. The other dietary treatments did not significantly alter A23187-induced LTB₄ synthesis.

Leukotriene B₅ was readily synthesized and released from neutrophils isolated from dogs fed the 5:1 and 10:1 diets for 6 and 12 weeks (see Figure 4) In dogs fed a 5:1 diet, the A23187-induced LTB₅ immunoreactivity increased from a basal concentration of 7 +/- 4 pg/1.2 x 10⁶ neutrophils to 33 +/- 3 pg/1.2 x 10⁶ neutrophils at 6 weeks and 42 +/- 7 pg/1.2 x 10⁶ neutrophils at 12 weeks. This represented increases of 370% and 500% at 6 and 12 weeks, respectively. When dogs were fed a 10:1 diet the concentration of A23187-induced LTB₅ immunoreactivity increased from 6 +/- 3 pg/1.2 x 10⁶ neutrophils to 36 +/- 3 pg/1.2 x 10⁶ neutrophils at 6 weeks and 29 +/- 9 pg/1.2 x 10⁶ neutrophils at 12 weeks. This represented increases of 500% and 385% at 6 and 12 weeks, respectively.

### Example 3

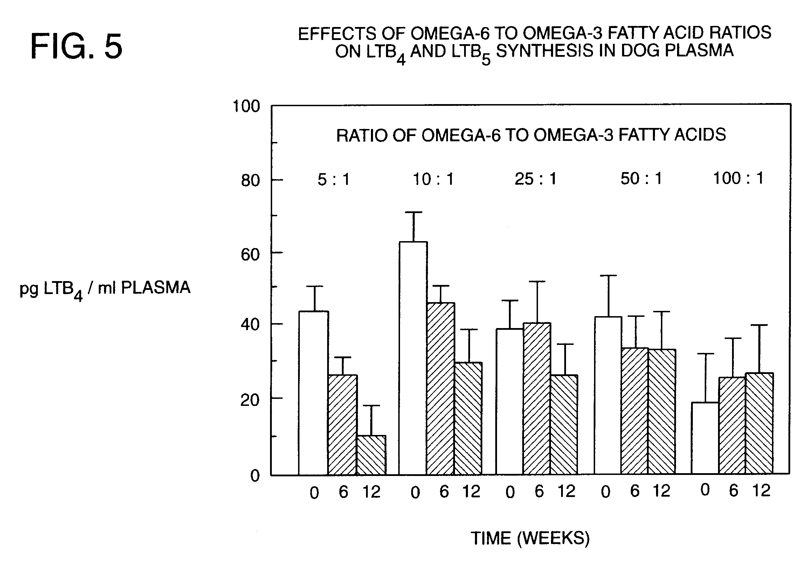

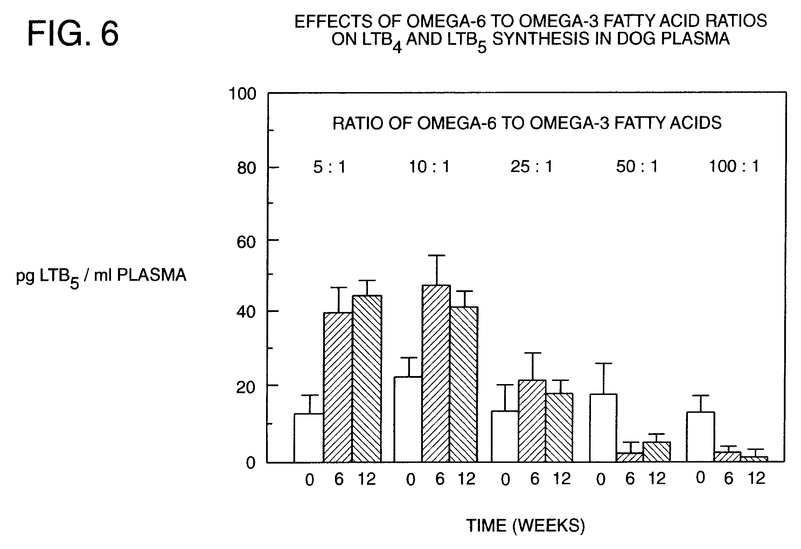

Plasma obtained from dogs after basal dietary conditioning had measurable amounts of LTB₄ (see Figure 5). Analysis of the LTB₅ immunoreactivity in the plasma from the same group of dogs indicated the LTB₅ concentrations (see Figure 6) were approximately one-half or less that of LTB₄. When dogs were fed 5:1 and 10:1 diets the mean plasma LTB₄ concentrations declined, and the mean plasma LTB₅ concentrations increased at 6 and 12 weeks. The mean LTB₄ plasma concentration for dogs fed a 5:1 diet decreased from a basal concentration of 44 +/- 6 pg/ml to 26 +/- 5 pg/ml at 6 weeks, and to 10 +/- 8 at 12 weeks. The mean LTB₄ plasma concentration for dogs fed a 10:1 diet decreased from a basal concentration of 63 +/- 8 pg/ml to 46 +/- 6 pg/ml at 6 weeks, and to 22 +/- 6 at 12 weeks. The 25:1, 50:1, and 100:1 diets did not significantly alter plasma LTB₄ concentrations.

Plasma LTB₅ concentrations increased when dogs were fed 5:1 and 10:1 diets (see Figure 6). The mean LTB₅ plasma concentration for dogs fed a 5:1 diet increased from a basal concentration of 13 +/- 4 pg/ml to 40 +/- 6 pg/ml at 6 weeks, and to 44 +/- 4 at 12 weeks. The mean LTB₅ plasma concentration for dogs fed a 10:1 diet increased from a basal concentration of 22 +/- 5 pg/ml to 47 +/- 8 pg/ml at 6 weeks, and to 41 +/- 4 at 12 weeks. There was no significant influence of 25:1, 50:1, and 100:1 diets on plasma LTB₅ concentrations.

### Example 4

Various diets were tested to determine the amounts of omega-3 and omega-6 fatty acids they contain. Five diet compositions were tested including Iams Eukanuba Light, Eukanuba Lamb & Rice, and three experimental diets which enhance the quantities of omega-3 and omega-6 fatty acids in Iams Eukanuba Original (Test diet 1), Iams Eukanuba Puppy (Test diet 2), and Iams Eukanuba Adult (Test diet 3). The amounts of n-3 and n-6 fatty acids for these diets were determined as percentages of the fatty acid profile and total weight percent of each diet composition. The results are given in Table 1. The percentages of n-3 and n-6 fatty acids used in the 5:1 and 10:1 diets of Examples 1-3 are also presented in Table 1.

The percentages of individual fatty acids were also determined with respect to the fatty acid profile of each diet. The results are given in Table 2.

Each data point presented in Tables 1 and 2 is an average of a range of data taken in that category for each diet composition. Eukanuba Light was tested 4 times and the range of data for each category is as follows: N-3 % of FAP: 3.7 to 4.5, N-6 % of FAP: 18.4 to 19.2, N-3 % of diet: 0.35 to 0.41, N-6 % of diet: 1.77 to 1.85, N-6 to N-3 ratio: 4.3 to 5.2, ALA % of FAP: 1.4 to 1.7, EPA % of FAP: 0.8 to 1.0, DHA % of FAP: 0.8 to 0.9. Eukanuba Lamb & Rice was tested 3 times and the range of data for each category is as follows: N-3 % of FAP: 1.8 to 2.5, N-6 % of FAP: 11.2 to 12.8, N-3 % of diet: 0.27 to 0.37, N-6 % of diet: 1.70 to 1.93, N-6 to N-3 ratio: 5.1 to 6.2, ALA % of FAP: 0.6 to 0.8, EPA % of FAP: 0.3 to 0.5, DHA % of FAP: 0.4 to 0.7. Test diet 1 was tested 4 times and the range of data for each category is as follows: N-3 % of FAP: 3.2 to 3.5, N-6 % of FAP: 20.1 to 23.9, N-3 % of diet: 0.48 to 0.68, N-6 % of diet: 3.54 to 4.27, N-6 to N-3 ratio: 6.3 to 7.5, ALA % of FAP: 1.1 to 1.3, EPA % of FAP: 0.7 to 0.8, DHA % of FAP: 0.6 to 0.7. Test diet 2 was tested 5 times and the range of data for each category is as follows: N-3 % of FAP: 3.5 to 4.2, N-6 % of FAP: 19.3 to 19.6, N-3 % of diet: 0.81 to 0.94, N-6 % of diet: 4.23 to 4.55, N-6 to N-3 ratio: 4.6 to 5.6, ALA % of FAP: 1.1 to 1.2, EPA % of FAP: 1.1 to 1.3, DHA % of FAP: 0.9 to 1.1. Test diet 3 was tested 2 times and the range of data for each category is as follows: N-3 % of FAP: 3.2 to 3.7, N-6 % of FAP: 20.2 to 20.4, N-3 % of diet: 0.52 to 0.64, N-6 % of diet: 3.33 to 3.49, N-6 to N-3 ratio: 5.0 to 6.4, ALA % of FAP: 1.1 to 1.1, EPA % of FAP: 0.9 to 1.0, DHA % of FAP: 0.8 to 0.9.

**Table 1**

| Percentages of Omega-3 and Omega-6 Fatty Acids in Various Diets | | | | | |
|---|---|---|---|---|---|
| | N-3 Percent of FAP¹ | N-6 Percent of FAP¹ | N-3 Percent of diet | N-6 Percent of diet | Ratio of n-6 to n-3 |
| Eukanuba Light | 3.92 | 19.07 | 0.37 | 1.82 | 4.9:1 |
| Eukanuba Lamb & Rice | 2.20 | 12.20 | 0.33 | 1.85 | 5.6:1 |
| Test diet 1 | 3.28 | 21.90 | 0.59 | 3.90 | 6.7:1 |
| Test diet 2 | 3.76 | 19.50 | 0.86 | 4.44 | 5.2:1 |
| Test diet 3 | 3.45 | 20.30 | 0.58 | 3.41 | 5.9:1 |
| 5:1 diet | 3.40 | 18.10 | 0.71 | 3.62 | 5.0:1 |
| 10:1 diet | 1.80 | 18.70 | 0.36 | 3.74 | 10.0:1 |

| | | | | | |
|---|---|---|---|---|---|
| ¹ "Fatty Acid Profile": Total amount of fatty acids in the diet composition. | | | | | |

**Table 2**

| Percentage of Specific Fatty Acids in the Fatty Acid Profile of Various Diets | | | |
|---|---|---|---|
| | ALA¹ | EPA² | DHA³ |
| Eukanuba Light | 1.55 | 0.88 | 0.83 |
| Eukanuba Lamb & Rice | 0.67 | 0.40 | 0.57 |
| Test diet 1 | 1.20 | 0.78 | 0.68 |
| Test diet 2 | 1.10 | 1.16 | 0.96 |
| Test diet 3 | 1.10 | 0.95 | 0.85 |

| | | | |
|---|---|---|---|
| ¹ Alpha-linolenic acid | | | |
| ² Eicosapentaenoic acid | | | |
| ³ Docosahexaenoic acid | | | |

It will be appreciated that feeding pet animals with a diet consisting essentially of the pet food products as hereinbefore described not only reduces allergic and inflammatory conditions in the skin of the animals thereby improving the general comfort and well-being of the animals, but there is also a cosmetic effect in that the appearance of the skin of the animals is improved. In particular, by preventing and/or alleviating symptoms of skin diseases such as dermatitis and pruritis unsightly skin conditions can be avoided or diminished giving the animals an attractive, healthy appearance.

From another aspect therefore, the present invention also resides in a method of improving the appearance of the skin of a pet animal which comprises feeding said pet animal a diet consisting essentially of a pet food composition containing omega-6 and omega-3 fatty acids in which the ratio of said omega-6 fatty acids to said omega-3 fatty acids is from 3:1 to 10:1 and wherein at least fifteen percent of the total fatty acids in said composition are said omega-6 fatty acids thereby to reduce skin inflammation.

While certain representative embodiments and details have been shown for purposes of illustrating the invention, it will be apparent to those skilled in the art that various changes in the process, method and product disclosed herein may be made without departing from the scope of the invention, which is defined in the appended claims.

## Claims

1. A pet food product for reducing inflammatory allergic responses comprising a pet food composition containing omega-6 and omega-3 fatty acids, wherein the ratio of said omega-6 fatty acids to said omega-3 fatty acids is from 3:1 to 10:1 and wherein at least fifteen percent of the total fatty acids in said composition are said omega-6 fatty acids.

2. The pet food product of claim 1 wherein at least three percent of the total fatty acids in said composition are said omega-3 fatty acids.

3. The pet food product of claim 1 wherein the ratio of said omega-6 fatty acids to said omega-3 fatty acids is from 5:1 to 10:1

4. The pet food product of claim 3 wherein the ratio of said omega-6 fatty acids to said omega-3 fatty acids is from 5:1 to 7.5:1

5. The pet food product of claim 1 wherein the fat source for said omega-3 fatty acids is one or more compounds selected from the group consisting of fish oil and flax.

6. The pet food product of claim 1 wherein said omega-3 fatty acids are one or more compounds selected from the group consisting of eicosapentaenoic acid, docosahexaenoic acid, and alpha-linolenic acid.

7. The pet food product of claim 6 wherein said omega-3 fatty acids are alpha-linolenic acids.

8. A pet food product for reducing inflammatory allergic responses comprising a pet food composition containing omega-6 and omega-3 fatty acids, wherein the ratio of said omega-6 fatty acids to said omega-3 fatty acids is from 3:1 to 10:1 and said omega-3 fatty acids consist essentially of a combination of eicosapentaenoic acid, docosahexaenoic acid, and alpha-linolenic acid.

9. The pet food product of claim 8 wherein the ratio of said omega-6 fatty acids to said omega-3 fatty acids is from 5:1 to 10:1.

10. The pet food product of claim 8 wherein the ratio of said omega-6 fatty acids to said omega-3 fatty acids is from 5:1 to 7.5:1

11. A method of improving the appearance of the skin of a pet animal which comprises feeding said pet animal a diet consisting essentially of a pet food composition containing omega-6 and omega-3 fatty acids in which the ratio of said omega-6 fatty acids to said omega-3 fatty acids is from 3:1 to 10:1 and wherein at least fifteen percent of the total fatty acids in said composition are said omega-6 fatty acids thereby to reduce skin inflammation.

12. The method of claim 11 wherein at least three percent of the total fatty acids in the said composition are said omega-3 fatty acids.

13. The method of claim 11 wherein the ratio of said omega-6 fatty acids to said omega-3 fatty acids is from 5:1 to 10:1.

14. The method of claim 13 wherein the ratio of said omega-6 fatty acids to said omega-3 fatty acids is from 5:1 to 7.5:1.

15. The method of claim 11 wherein the fat source for said omega-3 fatty acids is one or more compounds selected from the group consisting of fish oil and flax.

16. The method of claim 11 wherein said omega-3 fatty acids are one or more compounds selected from the group consisting of eicosapentaenoic acid, docosahexaenoic acid, and alpha-linolenic acid.

17. The method of claim 16 wherein said omega-3 fatty acids consist essentially of a combination of eicosapentaenoic acid, docosahexaenoic acid, and alpha-linolenic acid.

18. The method of claim 17 wherein said omega-3 fatty acids are alpha-linolenic acids.

19. The method of claim 11 wherein said pet animal is selected from the group consisting of dogs, cats and horses.

20. The method of claim 19 wherein said pet animal is a dog.
